# EUROPEAN PATENT APPLICATION

(11) **EP 2 894 900 A1**
(43) Date of publication of application: **15.07.2015**
(21) Application number: 13845057.2
(22) Date of filing: 08.08.2013
(51) Int. Cl.: H04W 24/10

(54) **METHOD, MOBILE TERMINAL AND SYSTEM FOR COUNTING COVERAGE BLIND SPOTS IN WIRELESS NETWORK**

(30) Priority: 11.10.2012 CN 201210384628
(71) Applicant: ZTE Corporation, Shenzhen, Guangdong 518057 (CN)
(72) Inventor: SUN, Gengmao, Shenzhen Guangdong 518057 (CN); DENG, Fangmin, Shenzhen Guangdong 518057 (CN); YU, Song, Shenzhen Guangdong 518057 (CN); CAO, Yaobin, Shenzhen Guangdong 518057 (CN)
(74) Representative: Schröer, Gernot H.
(86) International application number: PCT/CN2013/081076
(87) International publication number: WO 2014/056342

(57) **Abstract**

A method, mobile terminal and system for counting wireless network coverage blind spots are disclosed. The method includes: the mobile terminal receiving a wireless signal, and then acquiring intensity information of the wireless signal; and after judging whether the mobile terminal enters a wireless network coverage blind spot according to the intensity information of the wireless signal, acquiring current first location information of the mobile terminal.

## Description

### Technical Field

The present invention relates to the field of communication, and specifically, to a method, mobile terminal and system for counting wireless network coverage blind spots.

### Background of the Related Art

With the rapid development of the mobile communication technology, mobile terminal devices represented by mobile phones bring great convenience to people's lives, but all of these are premised on good network coverage. In order to provide good network coverage, wireless operators need to regularly know the coverage condition of their wireless networks, so as to perform purposeful network optimization. At present, in order to know and monitor the network coverage condition, a commonly used method is network assessment tests and user complaints. For the user complaints, since only a minority of users will complain when encountering problems of network quality, the network coverage condition cannot be reflected comprehensively and accurately through the user complaints.

Moreover, the network assessment tests include Drive Test (DT) and Call Quality Test (CQT). The test range and test frequency of the Drive Test and Call Quality Test are extremely limited, thus it is difficult to reflect the real coverage condition of the network, network coverage blind spots cannot be discovered in time, and it is time-consuming and laborious and testing costs are high.

### Summary of the Invention

The embodiments of the present invention provide a method, mobile terminal and system for counting wireless network coverage blind spots, which can solve or make up for the problem that the existing testing of the wireless network coverage blind spots is time-consuming and laborious, costs are high and testing results cannot accurately reflect the real coverage condition of the wireless network.

The embodiment of the present invention provides a mobile terminal, which comprises a wireless signal receiving module, a blind spot detection module and a location information acquisition module;
the wireless signal receiving module is configured to: receive a wireless signal, and acquire intensity information of the received wireless signal;
the blind spot detection module is configured to: judge whether the mobile terminal enters a wireless network coverage blind spot according to the intensity information of the wireless signal, if the mobile terminal enters the wireless network coverage blind spot, send an entering blind spot message to the location information acquisition module;
the location information acquisition module is configured to: after receiving the entering blind spot message, acquire first location information of the mobile terminal.

In one embodiment of the present invention, the blind spot detection module is further configured to: judge whether the mobile terminal enters a wireless network coverage area according to the intensity information of the wireless signal, if the mobile terminal enters the wireless network coverage area, send an entering coverage area message to the location information acquisition module;
the location information acquisition module is further configured to: after receiving the entering coverage area message, acquire current second location information of the mobile terminal.

In one embodiment of the present invention, the blind spot detection module is configured to judge whether the mobile terminal enters the wireless network coverage blind spot by means of:
comparing a signal intensity value included in the intensity information of the wireless signal with a preset signal intensity threshold value, judging whether the signal intensity value of the wireless signal is changed from greater than the signal intensity threshold value to less than the signal intensity threshold value, and if yes, judging that the mobile terminal enters the wireless network coverage blind spot from the wireless network coverage area.

In one embodiment of the present invention, the blind spot detection module is configured to judge whether the mobile terminal enters the wireless network coverage area by means of:
comparing a signal intensity value included in the intensity information of the wireless signal with a preset signal intensity threshold value, judging whether the signal intensity value of the wireless signal is changed from less than the signal intensity threshold value to great than or equal to the signal intensity threshold value, and if yes, judging that the mobile terminal enters the wireless network coverage area from the wireless network coverage blind spot.

In one embodiment of the present invention, the mobile terminal further comprises a storage module and an information transmitting module; wherein the storage module is configured to: store the first location information and/or the second location information acquired by the location information acquisition module; and the information transmitting module is configured to: in a case of judging that a transmitting condition is met, send the first location information and/or the second location information stored in the storage module.

In one embodiment of the present invention, the mobile terminal can be a mobile phone or a tablet computer.

In order to solve the above technical problem, the embodiment of the present invention further provides a method for counting wireless network coverage blind spots, which comprises:
a mobile terminal receiving a wireless signal, and acquiring intensity information of the received wireless signal;
judging whether the mobile terminal enters a wireless network coverage blind spot according to the intensity information of the wireless signal;
if judging that the mobile terminal enters the wireless network coverage blind spot, acquiring current first location information of the mobile terminal.

In one embodiment of the present invention, after judging that the mobile terminal enters the wireless network coverage blind spot, the method further comprises:
the mobile terminal receiving a wireless signal, and acquiring intensity information of the received wireless signal;
judging whether the mobile terminal enters a wireless network coverage area according to the intensity information of the wireless signal; and
if judging that the mobile terminal enters the wireless network coverage area, acquiring current second location information of the mobile terminal.

In one embodiment of the present invention, judging whether the mobile terminal enters the wireless network coverage blind spot according to the intensity information of the wireless signal comprises:
comparing a signal intensity value included in the intensity information of the wireless signal with a preset signal intensity threshold value, judging whether the signal intensity value of the wireless signal is changed from greater than the signal intensity threshold value to less than the signal intensity threshold value, and if yes, judging that the mobile terminal enters the wireless network coverage blind spot from the wireless network coverage area. In one embodiment of the present invention, judging whether the mobile terminal enters the wireless network coverage area according to the intensity information of the wireless signal comprises:
comparing a signal intensity value included in the intensity information of the wireless signal with a preset signal intensity threshold value, judging whether the signal intensity value of the wireless signal is changed from less than the signal intensity threshold value to great than or equal to the signal intensity threshold value, and if yes, judging that the mobile terminal enters the wireless network coverage area from the wireless network coverage blind spot.

In one embodiment of the present invention, after acquiring the current location information of the mobile terminal, the method further comprises:
storing the first location information and/or the second location information acquired; and
judging whether a transmitting condition is met, and if the transmitting condition is met, sending the first location information and/or the second location information stored.

In one embodiment of the present invention, the wireless network comprises at least one of Global System for Mobile Communications (GSM) wireless network, Code Division Multiple Access (CDMA) wireless network, Wideband Code Division Multiple Access (WCDMA) wireless network, Time Division-Synchronous Code Division Multiple Access (TD-SCDMA) wireless network, Worldwide Interoperability for Microwave Access (WiMAX) wireless network, Long Term Evolution (LTE) wireless network and WIFI wireless network.

In order to solve the above technical problem, the embodiment of the present invention further provides a system for counting wireless network coverage blind spots, which comprises: a blind spot location information receiving server and the above mobile terminal, wherein after acquiring the first location information and/or second location information, the mobile terminal sends the first location information and/or the second location information to the blind spot location information receiving server.

The embodiments of the present invention provide a method, mobile terminal and system for counting wireless network coverage blind spots, and the mobile terminal receives a wireless signal and then acquires intensity information of the wireless signal; and after judging that the mobile terminal enters a wireless network coverage blind spot according to the intensity information of the wireless signal, it acquires current first location information of the mobile terminal. The acquired first location information are boundary points of the wireless network coverage blind spot, thus the embodiments of the present invention at least have the following advantages.

The wireless operators can conveniently and efficiently obtain the boundary points of the wireless network coverage blind spot through mobile terminals (such as a mobile phone and a tablet computer and so on) commonly used by users, and the timeliness of acquisition is better than that in the existing testing method, and the consumed time and human resources are also much less; and with regard to mobile terminals with positioning function, nearly no additional cost is required, thus testing costs and expenses used by the operators for monitoring network conditions can be greatly reduced in the meantime;
since the boundary points of the wireless network coverage blind spots are acquired through the mobile terminals of the users in different places, all the acquired boundary points can more truly and effectively reflect the coverage condition of the wireless network, and the wireless operators can conveniently and accurately determine the specific location of the network coverage blind spot through these boundary points, which provides a reliable basis for the network optimization of the wireless operators and eventually benefits the majority of mobile terminal users and enhances the satisfaction degree of user experience.

### Brief Description of Drawings

- FIG. 1: is a structural schematic diagram 1 of a mobile terminal according to one embodiment of the present invention.
- FIG. 2: is a structural schematic diagram 2 of a mobile terminal according to one embodiment of the present invention.
- FIG. 3: is a structural schematic diagram 3 of a mobile terminal according to one embodiment of the present invention.
- FIG. 4: is a block diagram of a system for counting wireless network coverage blind spots according to one embodiment of the present invention.
- FIG. 5: is a schematic diagram of a flow of counting wireless network coverage blind spots according to one embodiment of the present invention.

### Preferred Embodiments of the Invention

The preferred embodiments of the present invention will be described in combination with the accompanying drawings below. The embodiments in the present invention and the characteristics in the embodiments can be optionally combined with each other in the condition of no conflict.

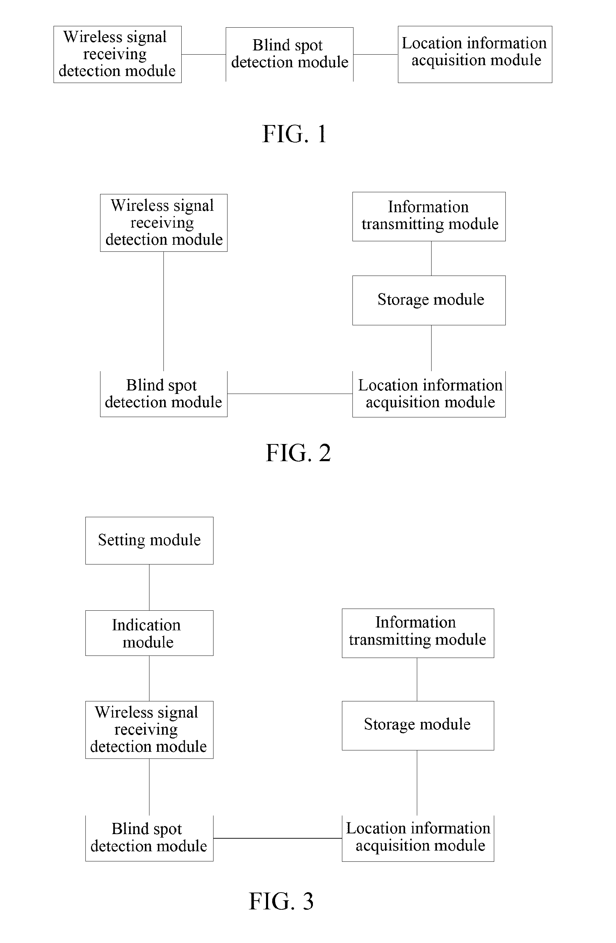

The mobile terminal for counting wireless network coverage blind spots provided in the embodiment can be smart terminals such as a mobile phone and a tablet computer and so on, or other wireless terminals dedicatedly used for testing the wireless network coverage blind spots; the smart terminals such as the mobile phone and the tablet computer are preferred in the embodiment, for basically this kind of smart terminals all have a positioning function, basically no additional cost is required when the function of testing the wireless network coverage blind spots is implemented on this kind of terminals, and the coverage of this kind of mobile terminals is extremely extensive, it is very convenient to test and more beneficial to test the wireless network coverage blind spots, and the obtained testing results can more truly reflect the coverage condition of the wireless network when compared with the existing testing method. With reference to FIG. 1, the mobile terminal in the embodiment can include a wireless signal receiving module, a blind spot detection module and a location information acquisition module, wherein:
the wireless signal receiving module is configured to: receive a wireless signal, and acquire intensity information of the received wireless signal;
the blind spot detection module is configured to: judge whether the mobile terminal enters a wireless network coverage blind spot according to the intensity information of the wireless signal, if a judgment result is that the mobile terminal enters the wireless network coverage blind spot, send an entering blind spot message to the location information acquisition module; and
the location information acquisition module is configured to: after receiving the entering blind spot message sent by the blind spot detection module, acquire current first location information of the mobile terminal, the location information acquisition module in the embodiment can be a GPS positioning module, a WiFi positioning module, a base station positioning module or other modules independent of the positioning mode of the current wireless network; the acquired first location information can include longitude information and/or latitude information, or time information and so on. The first location information acquired by the location information acquisition module is boundary points of the wireless network coverage blind spot, thus the wireless operators can more conveniently and efficiently obtain the boundary points of the wireless network coverage blind spot through the mobile terminal in the embodiment, and the timeliness of acquisition is better than that in the existing testing method, the consumed time and human resources are also much less; testing costs and expenses used by the operators for monitoring network conditions can be greatly reduced in the meantime; and the wireless operators can conveniently and accurately determine the specific location of the network coverage blind spot through these boundary points, which provides a reliable basis for the network optimization of the wireless operators and eventually benefits the majority of mobile terminal users and enhances the satisfaction degree of user experience.

In the embodiment, the mobile terminal can acquire boundary points from the wireless network coverage area to the wireless network coverage blind spot, and it also can acquire boundary points from the wireless network coverage blind spot to the wireless network coverage area, at this point, the blind spot detection module also can be used to judge whether the mobile terminal enters the wireless network coverage area according to the intensity information of the wireless signal sent by the wireless signal receiving module, and if the mobile terminal enters the wireless network coverage area, an entering coverage area message is sent to the location information acquisition module; the location information acquisition module is also used to acquire current second location information of the mobile terminal after receiving the entering coverage area message, wherein the acquired second location information also can include specific longitude information and/or latitude information or time information and so on; at this point the acquired second location information is the boundary points from the wireless network coverage blind spot to the wireless network coverage area, and the mobile terminal acquiring the boundary points from the wireless network coverage blind spot to the wireless network coverage area is more beneficial for the wireless operators to conveniently and accurately determine the specific location of the network coverage blind spot through these boundary points, which provides a more reliable basis for the network optimization of the wireless operators.

In addition, it should be noted that, the wireless network in the embodiment includes at least one of the GSM wireless network, CDMA wireless network, WCDMA wireless network, TD-SCDMA wireless network, WiMAX wireless network, LTE wireless network and WIFI wireless network.

Meanwhile, it can include multiple ways for the blind spot detection module judging whether the mobile terminal enters the wireless network coverage blind spot according to the intensity information of the wireless signal, only one implementation way therein is taken as an example to make descriptions below, the process is as follows: the blind spot detection module comparing a signal intensity value included in the intensity information of the wireless signal with a preset signal intensity threshold value, judging whether the signal intensity value of the wireless signal is changed from greater than the signal intensity threshold value to less than the signal intensity threshold value, if yes, judging that the mobile terminal enters the wireless network coverage blind spot, and if no, considering that the mobile terminal is in the wireless network coverage area.

Correspondingly, the process of the blind spot detection module judging whether the mobile terminal enters the wireless network coverage area according to the intensity information of the wireless signal can be as follows: the blind spot detection module comparing a signal intensity value included in the intensity information of the wireless signal with a preset signal intensity threshold value, judging whether the signal intensity value of the wireless signal is changed from less than the signal intensity threshold value to great than or equal to the signal intensity threshold value, if yes, judging that the mobile terminal enters the wireless network coverage area from the wireless network coverage blind spot; and if no, judging that the mobile terminal still stays in the wireless network coverage area.

After acquiring the corresponding location information, the mobile terminal in the embodiment can save the location information or send the location information to corresponding operators and so on, or the location information also can be directly displayed on the mobile terminal for users to select corresponding operations. One processing mode therein is taken as an example to make descriptions below.

With reference to FIG. 2, the mobile terminal in the embodiment also can include a storage module and an information transmitting module; the storage module is configured to store the first location information and/or the second location information acquired by the location information acquisition module, and an FLASH card and an SD card or other cards can be selected to serve as the storage module; and the information transmitting module is configured to send the first location information and/or the second location information stored in the storage module in a case that a transmitting condition is met. The transmitting condition in the embodiment can be set according to specific situations, for example, it can select to perform setting according to the specific situations such as the currently detected signal intensity and/or the resource utilization rate of the current mobile terminal and/or the interval of certain time threshold and so on; in the embodiment, the reason for setting the transmitting condition but not promptly generating corresponding information to send after acquiring the corresponding location information is that the wireless signal is very weak or there is no wireless network signal at all at the boundary of the blind spot. Therefore, in order to reduce the burden of the wireless network and lower the power consumption of the mobile terminal, when the boundary points of the blind spot are acquired, location information of the acquired boundary points is stored in a storage device of the mobile terminal, and at the appropriate time, the location information is sent to a network side in a form of predetermined information format, which can improve the success rate of the transmitting the information and is more beneficial for the resource utilization in the meantime. It should be noted that the information transmitting module in the embodiment can send the corresponding location information to the network side through a short message, an email or directly through radio frequency communication.

Moreover, in order to be more convenient for the users to operate, the following humanized settings can be made on the mobile terminal in the embodiment, and with reference to FIG. 3, the mobile terminal in the embodiment also can include:
a setting module, configured to: enable or close a function of counting wireless network coverage blind spots in the mobile terminal; and set a mode of the information transmitting module sending the information in the meantime, for example, a transmitting mode thereof can be set to send in transmitting modes such as the short message or email, and when the blind spot location information is sent by mean of the short message, it can be used for setting a target number to which the blind spot location short message is sent; and when the location information is sent through the email, it can be used for setting a target email during the transmission and so on;
an indication module, configured to: indicate whether the function of counting the wireless network coverage blind spots is enabled in the mobile terminal at present, wherein a specific indication mode can be one of icon, text prompt, indicator lamp and menu display; and indicate the currently selected information transmitting mode, for example, an email transmitting mode, a short message transmitting mode or a Bluetooth and WIFI transmitting mode is displayed by a responsive icon.

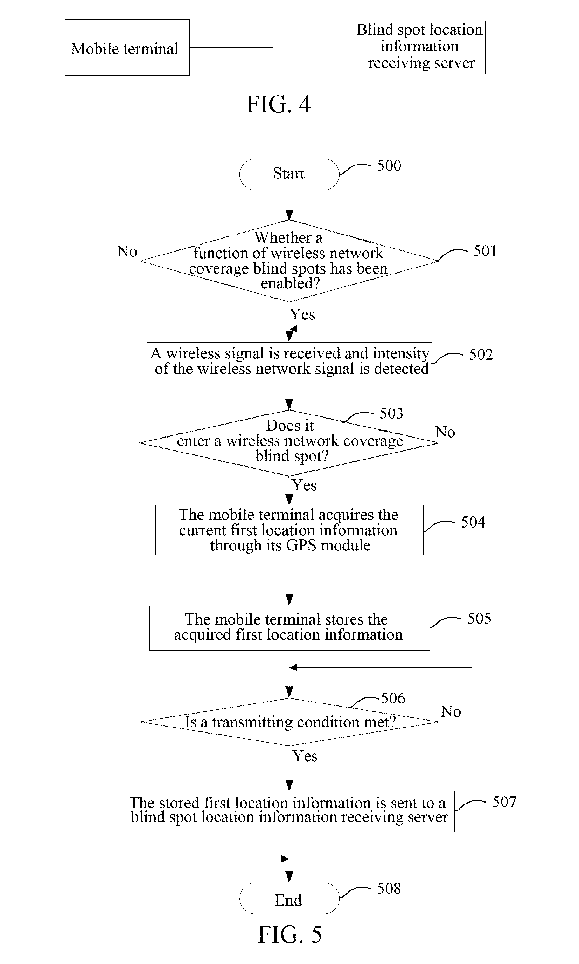

With reference to FIG. 4, a system for counting wireless network coverage blind spots is also provided in the embodiment, which includes the above mobile terminal and a blind spot location information receiving server of a network side, wherein after acquiring first location information and/or second location information, the mobile terminal sends the first location information and/or the second location information to the blind spot location information receiving server. A location information acquisition module included in the mobile terminal in FIG. 4 is preferably a GPS module, and the mobile terminal and the blind spot location information receiving server of the network side are connected through the wireless network, and certainly they also can be in a wired connection. In combination with the system in FIG. 4, the present invention will be further described with a complete blind spot testing flow as an example below, with reference to FIG. 5, the following steps are included.

In step 500, start.

In step 501, it is judged whether a function of counting wireless network coverage blind spots of the mobile terminal has been enabled. Specifically, the mobile terminal can receive a user operation, enabling or closing the function of counting the wireless network coverage blind spots through a setting module; if the function is not enabled, it directly jumps to step 508; and if the function has been enabled, step 502 is executed.

In step 502, the mobile terminal receives a wireless signal and detects intensity of the wireless signal, and the mobile terminal can be set to receive the wireless signal according to a preset frequency as required.

The mobile terminal can receive the signal of the wireless network through a wireless communication module, and the signal intensity of the wireless network can be measured by the Received Signal Strength Indication (RSSI).

In step 503, the mobile terminal compares a signal intensity value of the received wireless signal with a preset signal intensity threshold value of blind spot (with regard to a CDMA network, the signal intensity threshold value can be set as -105dbm), judging whether the wireless signal intensity value is hopped from greater than the signal intensity threshold value of blind spot to less than the signal intensity threshold value, and if yes, it is considered that the mobile terminal is entering the wireless network coverage blind spot, proceeding to step 504; if no, jumping back to step 502.

In step 504, the mobile terminal acquires the current first location information through its GPS module; wherein the location information at least contains a location in which the mobile terminal is currently located acquired through the GPS module, such as longitude and latitude information; the current location of the mobile terminal is one boundary point of the wireless network blind spot; and step 505 is executed.

In step 505, the mobile terminal stores the acquired first location information.

In step 506, it is judged whether a transmitting condition is met, and it can be judged whether the current wireless signal is good, if the wireless signal is good, it is considered that the transmitting condition is met, proceeding to step 507; if the wireless signal is not good, it proceeds to step 506 and continues to judge.

In step 507, the stored first location information is sent to the blind spot location information receiving server. Specifically, the mobile terminal can generate a short message from the stored first location information according to a predetermined template, and send the generated short message to a target number corresponding to the blind spot location information receiving server; the predetermined template here refers to a short message format that is predetermined by the network side and the terminal side and can be identified by the two parties. The blind spot location information receiving server of the network side can accurately parse and obtain the blind spot location information from the received blind spot location short message according to the format; the target number here is one particular number specified by the operators.

In step 508, end.

In the process shown in FIG. 5, the present invention is only described through the example of the acquisition from the wireless network coverage area to the wireless network coverage blind spot, after step 505 and before step 507, the following steps also can be included.

In step 5031, the mobile terminal compares a signal intensity value of the received wireless signal with a preset signal intensity threshold value of blind spot (with regard to a CDMA network, the signal intensity threshold value can be set as -105dbm), judging whether the wireless signal intensity value is hopped from less than the signal intensity threshold value of blind spot to greater than or equal to the signal intensity threshold value, and if yes, it is considered that the mobile terminal is entering the wireless network coverage area from the wireless network coverage blind spot, proceeding to step 5041; if no, jumping back to the above step 502.

In step 5041, the mobile terminal acquires the current second location information through its GPS module; wherein the location information at least contains a location in which the mobile terminal is currently located acquired through the GPS module, such as longitude and latitude information; the current location of the mobile terminal is another boundary point of the wireless network blind spot, namely one boundary point from the wireless network coverage blind spot to the wireless network coverage area; and step 5051 is executed.

In step 5051, the mobile terminal also stores the acquired second location information.

Correspondingly, in the above step 507, the mobile terminal also can send the acquired second location information simultaneously or individually to the blind spot location information receiving server; at this point, the judgment in step 506 can be performed in combination with the above step 5041, that is, as long as it is judged that it enters the wireless network coverage area, corresponding information can be sent; and the wireless operators can acquire more boundary points, which is more beneficial to determine the blind spot location, thereby better performing the optimization of the wireless network.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present invention is not limited to any combination of hardware and software in a specific form.

The above contents are detailed descriptions of the preferred embodiments of the present invention, it shall not be affirmed that the specific implementations of the present invention are only limited to these descriptions. For those ordinary skilled in the art to which the present invention belongs, simple deductions or substitutions also can be made in the premise of not departing from the conception of the present invention, and all these simple deductions or substitutions should be considered as falling into the protection scope of the present invention.

### Industrial Applicability

In the embodiments of the present invention, the problem that the existing testing of the wireless network coverage blind spots is time-consuming and laborious, costs are high and testing results cannot accurately reflect the real coverage condition of the wireless network can be solved or made up.

## Claims

1. A mobile terminal, comprising a wireless signal receiving module, a blind spot detection module and a location information acquisition module; wherein
the wireless signal receiving module is configured to: receive a wireless signal, and acquire intensity information of the received wireless signal;
the blind spot detection module is configured to: judge whether the mobile terminal enters a wireless network coverage blind spot according to the intensity information of the wireless signal, if the mobile terminal enters the wireless network coverage blind spot, send an entering blind spot message to the location information acquisition module;
the location information acquisition module is configured to: after receiving the entering blind spot message, acquire current first location information of the mobile terminal.

2. The mobile terminal according to claim 1, wherein the blind spot detection module is further configured to: judge whether the mobile terminal enters a wireless network coverage area according to the intensity information of the wireless signal, if the mobile terminal enters the wireless network coverage area, send an entering coverage area message to the location information acquisition module;
the location information acquisition module is further configured to: after receiving the entering coverage area message, acquire current second location information of the mobile terminal.

3. The mobile terminal according to claim 1, wherein the blind spot detection module is configured to judge whether the mobile terminal enters the wireless network coverage blind spot by means of:
comparing a signal intensity value included in the intensity information of the wireless signal with a preset signal intensity threshold value,
judging whether the signal intensity value of the wireless signal is changed from greater than the signal intensity threshold value to less than the signal intensity threshold value, and if yes, determining that the mobile terminal enters the wireless network coverage blind spot from a wireless network coverage area.

4. The mobile terminal according to claim 2, wherein the blind spot detection module is configured to judge whether the mobile terminal enters the wireless network coverage area by means of:
comparing a signal intensity value included in the intensity information of the wireless signal with a preset signal intensity threshold value,
judging whether the signal intensity value of the wireless signal is changed from less than the signal intensity threshold value to great than or equal to the signal intensity threshold value, and if yes, determining that the mobile terminal enters the wireless network coverage area from the wireless network coverage blind spot.

5. The mobile terminal according to any one of claims 2 to 4, further comprising a storage module and an information transmitting module; wherein the storage module is configured to: store the first location information and/or second location information acquired by the location information acquisition module; and the information transmitting module is configured to: in a case of determining that a transmitting condition is met, send the first location information and/or the second location information stored in the storage module.

6. The mobile terminal according to any one of claims 1 to 4, wherein the mobile terminal is a mobile phone or a tablet computer.

7. A method for counting wireless network coverage blind spots, comprising:
a mobile terminal receiving a wireless signal, and acquiring intensity information of the received wireless signal;
judging whether the mobile terminal enters a wireless network coverage blind spot according to the intensity information of the wireless signal; and
if determining that the mobile terminal enters the wireless network coverage blind spot, acquiring current first location information of the mobile terminal.

8. The method according to claim 7, after determining that the mobile terminal enters the wireless network coverage blind spot, further comprising:
the mobile terminal receiving a wireless signal, and acquiring intensity information of the received wireless signal;
judging whether the mobile terminal enters a wireless network coverage area according to the intensity information of the wireless signal; and
if determining that the mobile terminal enters the wireless network coverage area, acquiring current second location information of the mobile terminal.

9. The method according to claim 7, wherein judging whether the mobile terminal enters the wireless network coverage blind spot according to the intensity information of the wireless signal comprises:
comparing a signal intensity value included in the intensity information of the wireless signal with a preset signal intensity threshold value,
judging whether the signal intensity value of the wireless signal is changed from greater than the signal intensity threshold value to less than the signal intensity threshold value, and if yes, determining that the mobile terminal enters the wireless network coverage blind spot from a wireless network coverage area.

10. The method according to claim 8, wherein judging whether the mobile terminal enters the wireless network coverage area according to the intensity information of the wireless signal comprises:
comparing a signal intensity value included in the intensity information of the wireless signal with a preset signal intensity threshold value, judging whether the signal intensity value of the wireless signal is changed from less than the signal intensity threshold value to great than or equal to the signal intensity threshold value, and if yes, determining that the mobile terminal enters the wireless network coverage area from the wireless network coverage blind spot.

11. The method according to any one of claims 8 to 10, after acquiring current location information of the mobile terminal, further comprising:
storing the first location information and/or second location information acquired; and
judging whether a transmitting condition is met, and if the transmitting condition is met, sending the first location information and/or second location information stored.

12. The method according to any one of claims 7 to 10, wherein the wireless network comprises at least one of Global System for Mobile Communications (GSM) wireless network, Code Division Multiple Access (CDMA) wireless network, Wideband Code Division Multiple Access (WCDMA) wireless network, Time Division-Synchronous Code Division Multiple Access (TD-SCDMA) wireless network, Worldwide Interoperability for Microwave Access (WiMAX) wireless network, Long Term Evolution (LTE) wireless network and WIFI wireless network.

13. A system for counting wireless network coverage blind spots, comprising:
a blind spot location information receiving server and the mobile terminal according to any one of claims 1 to 6, wherein after receiving first location information and/or second location information, the mobile terminal sends the first location information and/or the second location information to the blind spot location information receiving server.
